# EUROPÄISCHE PATENTSCHRIFT

(11) **EP 3 743 320 B1**
(45) Veröffentlichungstag und Bekanntmachung des Hinweises auf die Patenterteilung: **22.06.2022**
(21) Anmeldenummer: 18803615.6
(22) Anmeldetag: 12.11.2018
(51) Int. Cl.: B61G 5/08

(54) **KUPPELEINRICHTUNG FÜR EINE DRUCKLUFTKUPPLUNG ODER DRUCKMEDIUMKUPPLUNG IN EINEM SCHIENENFAHRZEUG**
COUPLING DEVICE FOR A COMPRESSED-AIR COUPLING OR PRESSURE-MEDIUM COUPLING IN A RAIL VEHICLE
DISPOSITIF DE RACCORDEMENT POUR UN RACCORD À AIR COMPRIMÉ OU UN RACCORD À MILIEU SOUS PRESSION DANS UN VÉHICULE FERROVIAIRE

(30) Priorität: 25.01.2018 DE 102018101626
(43) Veröffentlichungstag der Anmeldung: 02.12.2020
(73) Patentinhaber: Voith Patent GmbH, 89522 Heidenheim (DE)
(72) Erfinder: SHI, Minzhe, 38108 Braunschweig (DE)
(86) Internationale Anmeldenummer: PCT/EP2018/080905
(87) Internationale Veröffentlichungsnummer: WO 2019/145061

(56) Entgegenhaltungen:
- DE-A1- 1 505 668
- US-A- 935 944
- US-A- 1 006 745

## Beschreibung

Die vorliegende Erfindung betrifft eine Kuppeleinrichtung für eine Druckluftkupplung oder Druckmediumkupplung in einem Schienenfahrzeug gemäß dem Oberbegriff von Anspruch 1.

Druckluft ist ein Standardarbeitsmedium in Schienenfahrzeugen und wird beispielsweise verwendet, um die Bremsen zu betätigen, die Türen zu öffnen und zu schließen usw. Ferner kann die Druckluft beim Kuppelvorgang oder Entkuppelvorgang der Zugkupplungen zwischen den verschiedenen Wagen verwendet werden.

Beispielsweise wird die Druckluft in verschiedenen Druckluftleitungen geführt, wobei sich entsprechende Druckluftleitungen der verschiedenen Wagen über Luftkupplungen miteinander gekuppelt werden. So wird beispielsweise zwischen einer Hauptluftleitung (HL) für den Bremsvorgang, einer Hauptluftbehälterleitung (HBL) für die Verbindung beziehungsweise die Versorgung der Luftbehälter der verschiedenen Wagen und einer Entkuppelleitung (EL) für den Entkuppelvorgang der beiden miteinander verbundenen Zugkupplungen (auch Zugkupplungshälften genannt) unterschieden.

Die bisherigen Druckluftkupplungen beziehungsweise Kuppeleinrichtungen in Druckluftkupplungen weisen einen vergleichsweise komplizierten vielteiligen Aufbau auf, um einerseits über in einem Ventilgehäuse verschiebbar gelagerte Muffen einen gegenüber der Umgebung abgeschlossenen und abgedichteten Raum der beiden miteinander gekoppelten Druckluftkupplungen herzustellen und andererseits über ein in diesem abgeschlossenen Raum positioniertes Ventil mit federbeaufschlagtem Ventilkörper und durch das Ventilgehäuse ausgebildeten Ventilsitz einen Strömungsquerschnitt für die Druckluft wahlweise abzusperren oder freizugeben. Dementsprechend müssen bei den bekannten Kuppeleinrichtungen zum Verbinden von zwei Luftleitungen und zur Freigabe des Strömungsquerschnitts für die Druckluft die einander zugeordneten Muffen im Ventilgehäuse verschoben werden und separat hierzu durch Stößel die Ventilkörper von den Ventilsitzen in den Ventilgehäusen abgehoben werden. Gegebenenfalls kommen für die Betätigung auch Hilfsluftleitungen und weitere Steuerungen zum Einsatz.

Obwohl die bekannten Kuppeleinrichtungen für eine Druckluftkupplung eine vergleichsweise gute Abdichtung gegen das Eindringen von Staub und Wasser in die Druckluftleitungssysteme gewährleisten, führt der vergleichsweise komplizierte Aufbau zu einer vergleichsweise großen Anfälligkeit für Fehlfunktionen, zu hohen Herstellungskosten sowie zu einem vergleichsweise große Bauraumbedarf.

US 1,006,745 beschreibt eine Ausführung einer Kuppeleinrichtung mit einem Gehäuse und einer Schiebemuffe, die verschiebbar im Gehäuse gelagert ist und stirnseitig an einem axialen Ende aus dem Gehäuse herausragt. Es ist ferner ein Ventilkörper der mit einem Ventilsitz zusammenarbeitet vorgesehen, um ein Ventil auszubilden, das einen Strömungsquerschnitt wahlweise absperrt oder freigibt, wobei der Ventilsitz von der Schiebemuffe gebildet ist. Bei dieser Ausführung ist der Ventilsitz im Gehäuse innerhalb und auf der Anschlussseite zum Fahrzeug vorgesehen. Dieser ist damit nur schwer zugängig, was insbesondere einen Austausch von Verschleißsteilen erschwert. Ferner sind Ablagerungen im vor dem Ventilsitz liegenden Teilbereich des Gehäuses nicht oder nur mit aufwendigen Zusatzmaßnahmen vermeidbar.

Der vorliegenden Erfindung liegt daher die Aufgabe zugrunde, eine Kuppeleinrichtung für eine Druckluftkupplung oder allgemein Druckmediumkupplung in einem Schienenfahrzeug anzugeben, wobei die Kuppeleinrichtung äußerst zuverlässig arbeitet, einen sicheren Schutz gegen Eindringen von Staub und Wasser in das Leitungssystem bietet und die Herstellungs- und Instandhaltungskosten vorteilhaft reduziert sind.

Die erfindungsgemäße Aufgabe wird durch eine Kuppeleinrichtung mit den Merkmalen von Anspruch 1 gelöst. In den abhängigen Ansprüchen werden vorteilhafte und besonders zweckmäßige Ausgestaltungen der Erfindung angegeben.

Eine erfindungsgemäße Kuppeleinrichtung für eine Druckluftkupplung oder Druckmediumkupplung in einem Schienenfahrzeug weist ein Gehäuse auf, auch Ventilgehäuse genannt, sowie eine Schiebemuffe, die verschiebbar im Gehäuse gelagert ist und stirnseitig an einem axialen Ende aus dem Gehäuse herausragt. Somit kann die Schiebemuffe in Anlage mit einer gegengleichen Schiebemuffe einer identischen Kuppeleinrichtung oder auch einer anders aufgebauten Kuppeleinrichtung gebracht werden, sodass durch Zusammenschieben der einander zugeordneten Gehäuse der beiden Kuppeleinrichtungen die Schiebemuffen in Richtung zu ihrem jeweiligen Gehäuse beziehungsweise in ihr jeweiliges Gehäuse hinein geschoben werden.

Die erfindungsgemäße Kuppeleinrichtung weist ferner einen Ventilkörper auf, der mit einem Ventilsitz zusammenarbeitet, um ein Ventil auszubilden, das einen Strömungsquerschnitt für die Druckluft beziehungsweise das Druckmedium wahlweise absperrt oder freigibt. Dementsprechend kann der Ventilkörper vom Ventilsitz abgehoben werden, um den Strömungsquerschnitt freizugeben, oder - insbesondere mittels eines Federelementes - auf den Ventilsitz gedrückt werden, um den Strömungsquerschnitt abzusperren.

Dabei bildet die Schiebemuffe den Ventilsitz aus, also jenes Bauteil, das verschiebbar im Ventilgehäuse positioniert ist und von außen insbesondere mittels einer gegengleichen Schiebemuffe einer anderen Kuppeleinrichtung betätigt werden kann.

Durch die Ausgestaltung kann der herkömmlich im Inneren des Ventilgehäuses positionierte Ventilsitz erfindungsgemäß in den Bereich des axial äußeren Endes der Schiebemuffe und insbesondere axial außerhalb des Gehäuses, zumindest in einem ungekuppelten Zustand der Kuppeleinrichtung, verlagert werden, sodass durch Betätigen der Schiebemuffe, die den Ventilsitz ausbildet, das Ventil unmittelbar geöffnet werden kann, ohne dass ein anderer Stößel oder dergleichen notwendig ist.

Der Ventilsitz umschließt vorteilhaft den Strömungsquerschnitt für die Druckluft beziehungsweise das Druckmedium, sodass die Druckluft beziehungsweise das Druckmedium bei geöffnetem Ventil insbesondere radial innerhalb des Ventilsitzes durch die Schiebemuffe strömt. Zumindest in einem axialen Abschnitt, in welchem der Ventilkörper im geschlossenen Zustand des Ventils am Ventilsitz anliegt, kann die Druckluft beziehungsweise das Druckmedium dann vorteilhaft radial außen am Ventilkörper vorbei strömen, also zwischen Ventilsitz und Ventilkörper durchströmen, wenn das Ventil geöffnet ist.

Gemäß einer Ausführungsform der Erfindung ist die Schiebemuffe das einzige verschiebbare Bauteil der Kuppeleinrichtung, das an der Kuppelfunktion und Strömungsquerschnittseinstellungsfunktion beteiligt ist. Gemäß einer alternativen Ausführungsform kann zusätzlich zu der Schiebemuffe ein weiteres Bauteil, beispielsweise der Ventilkörper, verschiebbar im Gehäuse gelagert sein und durch Verschiebung beider Bauteile kann die gewünschte Funktion der Abdichtung gegenüber der Umgebung und der Freigabe des Strömungsquerschnitts erreicht werden.

Im erstgenannten Fall wird somit das Ventil allein durch Verschieben des Ventilsitzes, demnach der Schiebemuffe, die den Ventilsitz ausbildet, geöffnet, wohingegen der Ventilkörper ortsfest im Gehäuse positioniert ist. Gemäß dem zweitgenannten Fall werden der Ventilsitz und der Ventilkörper im Gehäuse beziehungsweise gegenüber dem Gehäuse verschoben.

Bevorzugt sind im zweitgenannten Fall die Schiebemuffe und der Ventilkörper derart insbesondere mittels einer anderen Kuppeleinrichtung betätigbar angeordnet, dass beim Kuppelvorgang der Kuppeleinrichtung zunächst das Ventil geöffnet wird und anschließend die Schiebemuffe im Bereich ihres axial äußeren Endes, insbesondere durch Anlegen einer entsprechenden Schiebmuffe der anderen Kuppeleinrichtung, abgedichtet wird. Dadurch können mit aus dem Ventil ausströmender Druckluft Fremdkörper oder Medien wie Wasser, Staub, Schnee oder dergleichen aus der Kuppeleinrichtung, insbesondere in oder an der Schiebemuffe entfernt (ausgeblasen) werden, bevor die Abdichtung der Kuppelreinrichtung gegenüber der Umgebung erfolgt. Damit wird die Gefahr des Eindringens von Schmutz oder Wasser in das Druckluftsystem noch weiter reduziert.

Die zuvor genannte Funktion kann beispielsweise dadurch erreicht werden, dass der Ventilkörper weiter axial aus dem Gehäuse herausragt als die Schiebemuffe, sodass beim Kuppeln zunächst der Ventilkörper verschoben wird und erst später, wenn der Ventilkörper um ein vorbestimmtes Ausmaß verschoben wurde, die Schiebemuffe verschoben wird.

Erfindungsgemäßist der Ventilsitz in einem Abschnitt der Schiebemuffe ausgebildet, der axial außerhalb des Gehäuses, zumindest in einem ungekuppelten Zustand der Kuppeleinrichtung, positioniert ist. Beispielsweise ist der Ventilsitz im Bereich des axial äußeren Endes der Schiebemuffe positioniert.

Gemäß einer Ausführungsform der Erfindung weist/weisen der Ventilkörper und/oder der Ventilsitz eine dem jeweils anderen Bauteil zugewandte konische äußere Oberfläche auf. Dies ist jedoch nicht zwingend.

Der Ventilkörper kann gemäß einer Ausführungsform der Erfindung kegelförmig sein. Eine andere Ausführungsform sieht eine kugelförmige Gestaltung des Ventilkörpers vor. Andere Formen sind möglich.

Bevorzugt umschließt die Schiebemuffe eine Längsachse der Kuppeleinrichtung konzentrisch und ist in Richtung der Längsachse verschiebbar im Gehäuse gelagert. Beispielsweise ist der Ventilkörper fluchtend zur Schiebemuffe positioniert und insbesondere radial innerhalb der Schiebemuffe angeordnet.

Gemäß einer Ausführungsform der Erfindung können ein zweiter Ventilkörper und ein zweiter Ventilsitz vorgesehen sein, um ein zweites Ventil auszubilden, das hinsichtlich einer Strömung der Druckluft beziehungsweise des Druckmediums durch die Kuppeleinrichtung in Reihe zu dem ersten Ventil, das durch den ersten Ventilkörper und den ersten Ventilsitz ausgebildet wird, angeordnet ist. Die beiden Ventile sind bevorzugt gemeinsam betätigbar, insbesondere durch eine entsprechende mechanische Verbindung zwischen jeweils den Ventilkörpern und/oder den Ventilsitzen.

Die Schiebemuffe ist bevorzugt entgegen der Kraft eines Federelementes verschiebbar. Das Federelement kann beispielsweise als Spiralfeder, Tellerfeder oder Wellfeder ausgeführt sein. Jedoch kommen auch andere Federformen in Betracht. Bei der Feder handelt es sich insbesondere um eine Druckfeder, jedoch sind auch Ausgestaltungen mit Zugfedern möglich. Als Federmaterial kommen beispielsweise Gummi, Polymere oder Elastomere in Betracht.

Zusätzlich oder alternativ kann die Schiebemuffe gemäß einer Ausführungsform der Erfindung auch entgegen der Kraft der Druckluft oder des Druckmediums verschiebbar sein. Beispielsweise wirkt die Druckluft oder das Druckmedium über eine Kolbenfläche auf die Schiebemuffe.

Dadurch, dass mögliche Verschleißteile auf der Vorderseite der Kuppeleinrichtung positioniert werden können, wobei die Vorderseite der Kuppeleinrichtung jene Seite ist, die einer Gegenkuppeleinrichtung zugewandt ist, die mit der Kuppeleinrichtung gekuppelt werden kann, ist ein Austausch der Verschleißteile schnell und kostengünstig möglich.

Die erfindungsgemäße Ausgestaltung ermöglicht geringe Herstellungskosten, ein geringes Gewicht, sowie einen reduzierten Bauraumbedarf. Ferner sind vergleichsweise große Volumenströme des Druckmediums beziehungsweise der Druckluft möglich. Auf der dem Kuppelende abgewandten Seite positionierte Deckel für das Ventilgehäuse können entfallen.

Die erfindungsgemäße Kuppeleinrichtung ist mit baugleichen Kuppeleinrichtungen kompatibel, sowie bevorzugt auch mit herkömmlichen Kuppeleinrichtungen.

Die Schiebemuffe kann rohrförmig gestaltet sein, somit als in der Axialrichtung durchgängiges, über dem Umfang geschlossenes Bauteil mit Eintritts- und Austrittsöffnungen für die Druckluft beziehungsweise das Druckmedium an beiden axialen Enden.

Die Erfindung soll nachfolgend anhand von Ausführungsbeispielen und den Figuren exemplarisch beschrieben werden.

Es zeigen:
- Fig. 1a - 1e: schematische Darstellungen von Ausführungsbeispielen der Erfindung zusammengefasst in einer ersten Prinzipgruppe;
- Fig. 2a - 2e: schematische Darstellungen von Ausführungsbeispielen der Erfindung zusammengefasst in einer zweiten Prinzipgruppe;
- Fig. 3a - 3e: weitere schematische Darstellungen von Ausführungsbeispielen der zweiten Prinzipgruppe;
- Fig. 4a - 4e: schematische Darstellungen von Ausführungsbeispielen der Erfindung zusammengefasst in einer dritten Prinzipgruppe;
- Fig. 5a - 5f: schematische Darstellungen von Ausführungsbeispielen der Erfindung zusammengefasst in einer vierten Prinzipgruppe;
- Fig. 6a - 6e: schematische Darstellungen von Ausführungsbeispielen der Erfindung zusammengefasst in einer fünften Prinzipgruppe.

In den Figuren werden sich entsprechende Bauteile mit denselben Bezugszeichen bezeichnet. Die verschiedenen Ausführungsbeispiele sind in Prinzipgruppen gegliedert, wobei diese Gliederung jedoch nicht einschränkend zu verstehen ist.

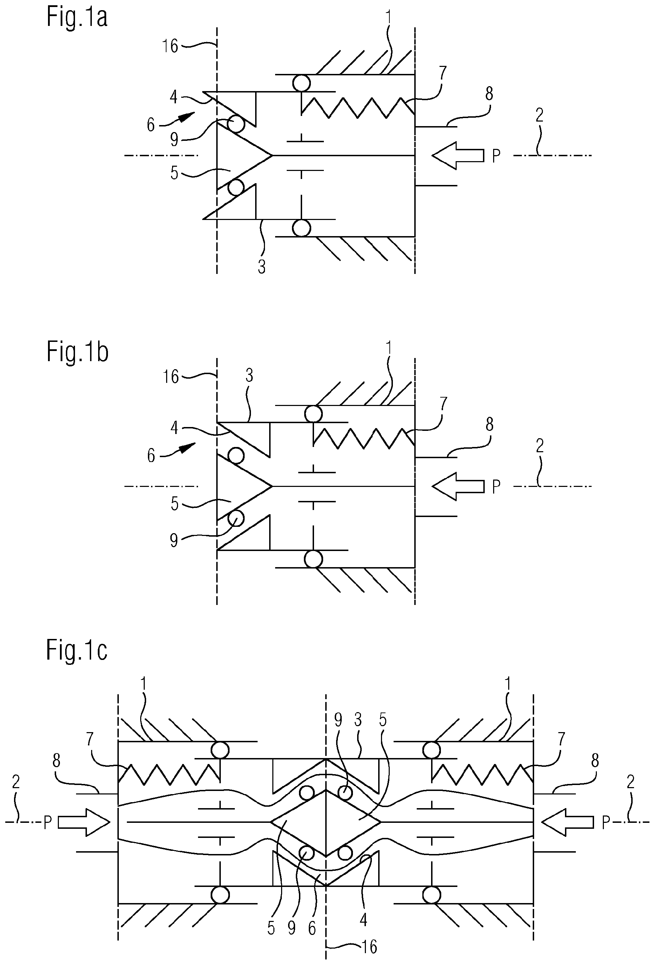

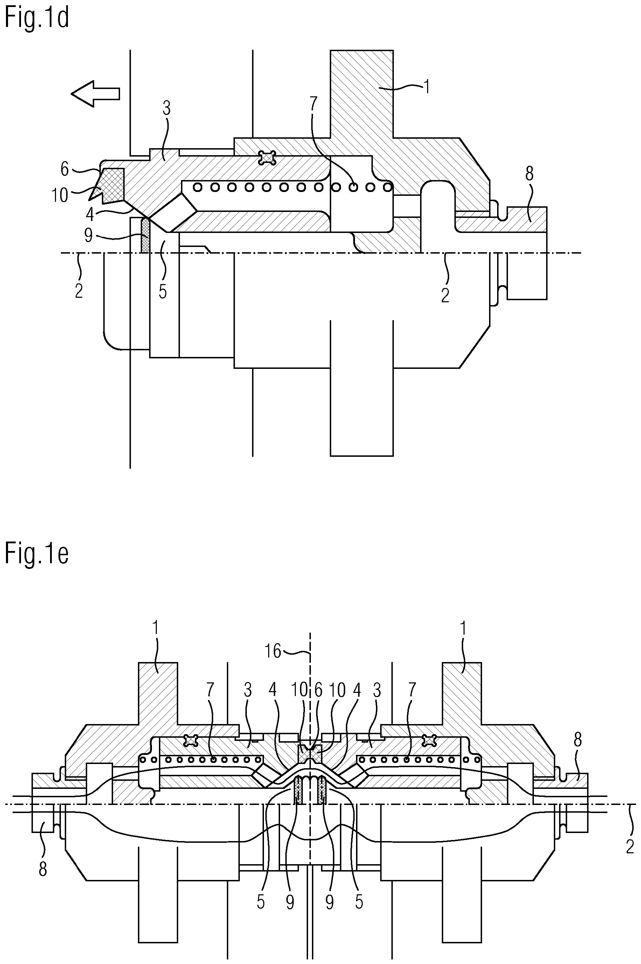

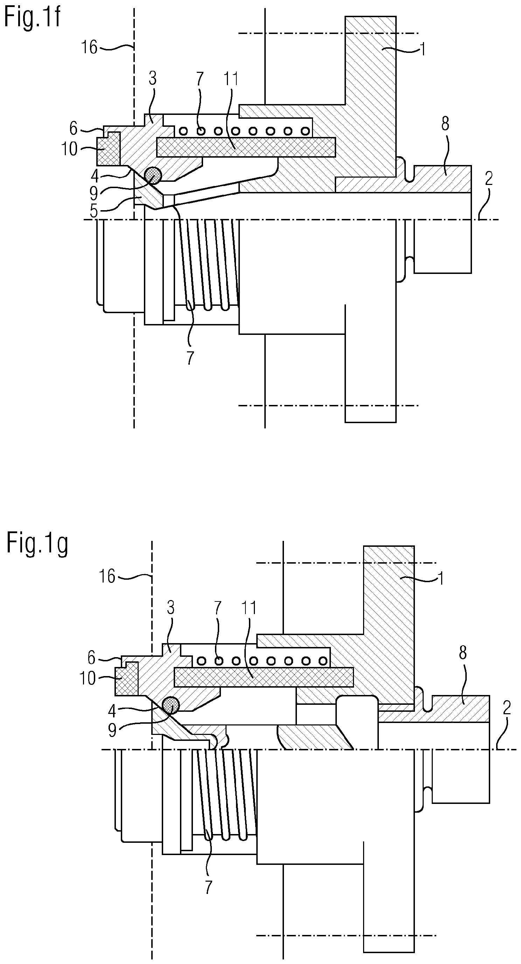

In den Ansichten a bis c der Figuren 1 bis 6 sind Prinzipskizzen von erfindungsgemäßen Kuppeleinrichtungen dargestellt, wobei in den Ansichten a jeweils der ungekuppelte Zustand einer Kuppeleinrichtung gezeigt ist, in den Ansichten b der gekuppelte Zustand einer Kuppeleinrichtung und in den Ansichten c der Zustand von zwei miteinander gekuppelten Kuppeleinrichtungen.

Die Ausführungsformen gemäß den Figuren 1 bis 6 weisen jeweils eine in einem Gehäuse 1 in Richtung einer Längsachse 2 verschiebbare Schiebemuffe 3 auf. Die Schiebemuffe 3 bildet einen Ventilsitz 4, der mit einem Ventilkörper 5 zusammenarbeitet, um ein Ventil zur Verfügung zu stellen, das den Strömungsquerschnitt für ein Druckmedium, insbesondere Druckluft, wahlweise freigibt oder versperrt.

Durch Betätigen der Schiebemuffe 3 an ihrem vorderen Ende 6 wird der Ventilsitz 4 vom Ventilkörper 5 abgehoben, entgegen der Kraft der Ventilfeder 7, und gibt dadurch den Strömungsquerschnitt für das Druckmedium beziehungsweise die Druckluft frei, sodass diese durch einen in der Kuppeleinrichtung gebildeten Kanal strömen kann, der sich vom vorderen Ende 6 der Schiebemuffe 3 bis zu einem hinteren Ende 8 der Kuppeleinrichtung durch die Schiebemuffe 3 und das Gehäuse 1 erstreckt.

Im gekuppelten Zustand der Kuppeleinrichtung entspricht das vordere Ende 6 der Ebene 16 der Stirnplatte des Kupplungskopfes, die durch eine gestrichelte Linie in den Figuren eingezeichnet ist. Wie man in den Ansichten a erkennen kann, steht das vordere Ende 6 der Schiebemuffe 3 im ungekuppelten Zustand der Kuppeleinrichtung über diese Ebene 16 der Stirnplatte des Kupplungskopfes über. Das Betätigen der Kuppeleinrichtung, um den Strömungsquerschnitt für das Druckmedium, insbesondere die Druckluft, zu öffnen, erfolgt dadurch, dass die Schiebemuffe 3 an einer gegengleichen Schiebemuffe 3 anstößt, sodass die beiden Schiebemuffen 3 mit ihren einander zugewandten vorderen Enden 6 jeweils bis in die Ebene 16 der Stirnplatte des jeweiligen Kupplungskopfes verschoben werden, was aus den Ansichten c ersichtlich ist.

Wie aus den verschiedenen Darstellungen ersichtlich ist, kann zwischen dem Ventilsitz 4 und dem Ventilkörper 5 eine Dichtung 9 vorgesehen sein, die im ungekuppelten Zustand die Kuppeleinrichtung sicher gegen Staub und Wasser abdichtet. Alternativ kann die Dichtung durch Dichtflächen im Ventilsitz 4 und im Ventilkörper 5 gebildet werden.

Bei den Ausführungsbeispielen gemäß der Figur 1 wird nur die Schiebemuffe 3 beim Kuppeln der Kuppeleinrichtung in Richtung der Längsachse 2 verschoben. Der Ventilkörper 5 hingegen ist stationär im Gehäuse 1 positioniert. Die Schiebemuffe 3 weist einen kegelförmigen inneren Querschnitt auf, der zum vorderen Ende 6 hin zunehmend erweitert ist. Das vordere Ende des Ventilkörpers 5 liegt im gekuppelten wie im ungekuppelten Zustand der Kuppeleinrichtung in der Ebene 16 der Stirnplatte des Kupplungskopfes. Alternativ könnte es auch weiter nach innen in Richtung des Gehäuses 1 versetzt sein.

Die Figuren 1d und 1e zeigen mögliche konstruktive Details eines Ausführungsbeispiels der Kuppeleinrichtung im ungekuppelten Zustand (Figur 1d) und gekuppelten Zustand (Figur 1e). Wie man sieht, erfolgt das Verschieben der Schiebemuffe 3 dadurch, dass zwei baugleiche oder auch verschieden gestaltete Kuppeleinrichtungen gegeneinander mit ihren Schiebemuffen 3 zur Anlage gebracht werden und soweit aufeinander zugeschoben werden, bis die vorderen Enden 6 jeweils in die Ebenen 16 der Stirnplatten des Kupplungskopfes geschoben werden, wobei die beiden Ebenen 16 der beiden Kuppeleinrichtungen im gekuppelten Zustand zusammenfallen.

In dem gezeigten Ausführungsbeispiel ist die Schiebemuffe 3 über eine Druckfeder an einem inneren Bund des Gehäuses 1 elastisch abgestützt, wobei die Druckfeder in einen Ringraum innerhalb der Schiebemuffe 3 hineinragt. Die Schiebemuffe 3 gleitet radial außen und radial innen jeweils an einem axialen Vorsprung des Gehäuses 1, wobei sie gegen den radial äußeren axialen Vorsprung abgedichtet ist.

Am radial inneren axialen Vorsprung des Gehäuses 1 ist der Ventilkörper 5 angeschlossen.

Stirnseitig trägt die Schiebemuffe 3 am vorderen Ende 6 ein Dichtelement 10, das der Abdichtung der beiden Schiebemuffen 3 gegeneinander dient.

Beim Ausführungsbeispiel gemäß der Figur 1f ist ein Gummirohr 11 vorgesehen, über welches die Schiebemuffe 3 am Gehäuse 1 angeschlossen ist. Das Gummirohr 11 kann sich entsprechend verformen, wenn die Schiebemuffe 3 in Richtung des Gehäuses 1 entgegen der Kraft der Ventilfeder 7 gedrückt wird. Zugleich stellt das Gummirohr 11 eine Abdichtung der Schiebemuffe 3 gegen das Gehäuse 1 dar, um den inneren Strömungskanal für das Druckmedium beziehungsweise die Druckluft gegen die Umgebung abzudichten, wenn zwei Schiebemuffen 3 stirnseitig aneinander anliegen.

Auch beim Ausführungsbeispiel gemäß der Figur 1g ist ein Gummirohr 11 vorgesehen, über welches die Schiebemuffe 3 am Gehäuse 1 angeschlossen ist. Im Unterschied zum Ausführungsbeispiel gemäß der Figur 1f erfolgt die Strömungsführung auch radial außerhalb des axialen Vorsprungs des Gehäuses 1, welcher den Ventilkörper 5 trägt.

Die Vorteile der Ausführungsformen gemäß der Figur 1 sind ein sicherer Schutz gegen Eindringen von Staub und Wasser ins Innere der Kuppeleinrichtung, insbesondere den das Druckmedium beziehungsweise die Druckluft führenden Kanal. Dies wird besonders durch die Kegelform des Ventilkörpers 5 und der Schiebemuffe 3 erreicht. Die Ausführungsformen sind kompatibel mit bisherigen Hauptluftbehälterleitungen sowie sogenannten Hauptluftbehälterleitungen mit langer Muffe. Der Aufbau ist einfach und es werden sehr wenige Bauteile benötigt. Die Ausführungsformen zeichnen sich durch eine sehr kleine Gleitfläche aus. Ein Hinterdeckel für das Gehäuse 1 kann entfallen. Der Bauraumbedarf ist gering, das Gewicht ebenso. Die Herstellungskosten sind reduziert und Verschleißteile sind auf der Vorderseite angeordnet und austauschbar. Zugleich wird ein großer Volumenstrom ermöglicht.

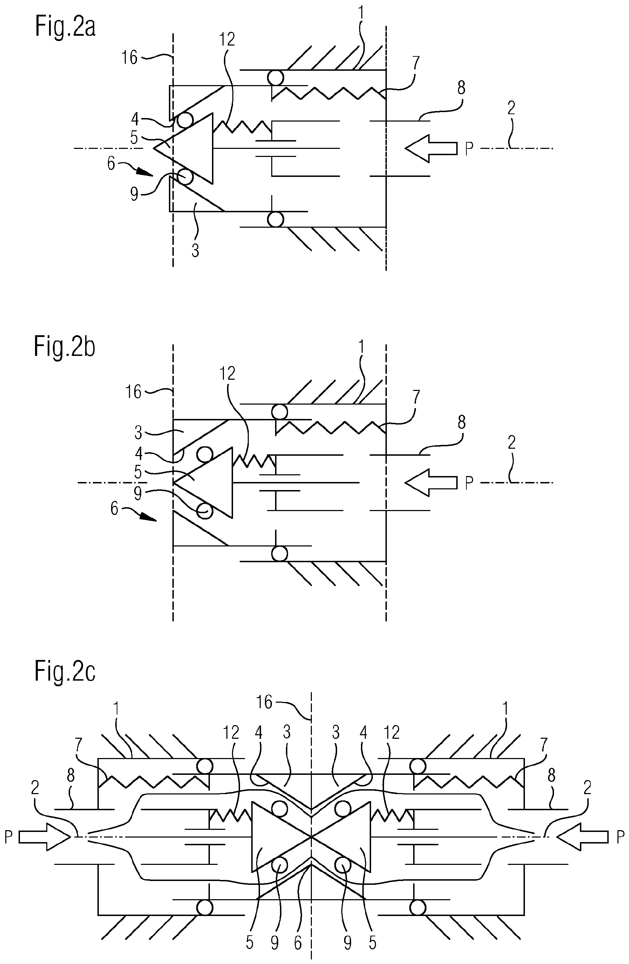

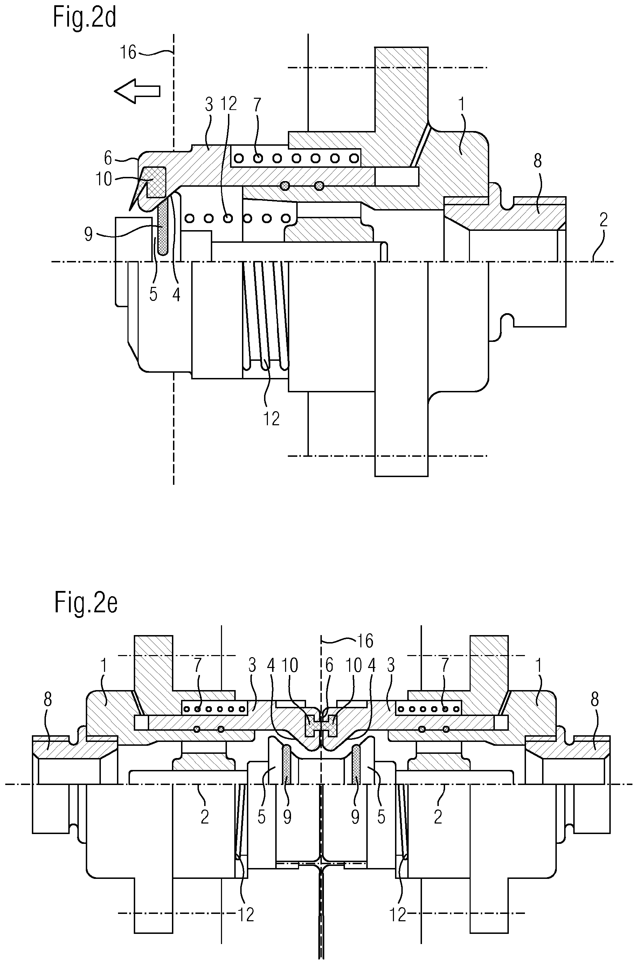

Beim Ausführungsbeispiel gemäß der Figur 2 (Ansichten a bis e) ist neben der Schiebemuffe 3 auch der Ventilkörper 5 in Richtung der Längsachse 2 verschiebbar gegenüber dem Gehäuse 1. Somit wird beim Kuppeln der Kuppeleinrichtung auch der Ventilkörper 5 mit seinem vorderen Ende aus einer Position vor der Ebene 16 der Stirnplatte des Kupplungskopfes in die Ebene 16 der Stirnplatte des Kupplungskopfes verschoben. Auch die Verschiebung des Ventilkörpers 5 erfolgt entgegen der Kraft eines Federelementes, hier Ventilkörperfeder 12 genannt, die einerseits ortsfest im Gehäuse 1 abgestützt ist und andererseits am Ventilkörper 5.

Im gekuppelten Zustand liegen somit die vorderen Enden der Schiebemuffen 3 und der Ventilkörper 5 alle gemeinsam in einer Ebene, bevorzugt der Ebene 16 der Stirnplatten der Kupplungsköpfe.

Die Figur 2d zeigt mögliche konstruktive Details der entsprechenden Kuppeleinrichtung im ungekuppelten Zustand. Die Figur 2e zeigt zwei aneinander gekuppelte Kuppeleinrichtungen, die entsprechend aufgebaut sind. Wie man sieht, gleitet der Ventilkörper 5 ebenfalls entlang eines axialen Vorsprungs des Gehäuses 1, wobei dieser axiale Vorsprung auf seiner radialen Außenseite die Schiebemuffe 3 trägt und auf seiner radialen Innenseite den Ventilkörper 5 beziehungsweise eine axiale Verlängerung desselben. Das Druckmedium beziehungsweise die Druckluft kann durch axiale Bohrungen in diesem axialen Vorsprung strömen.

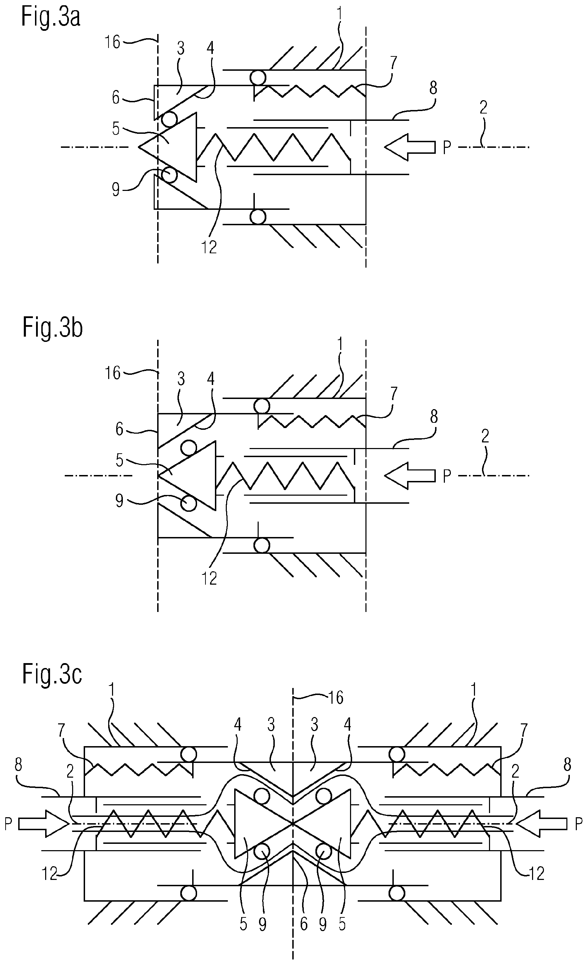

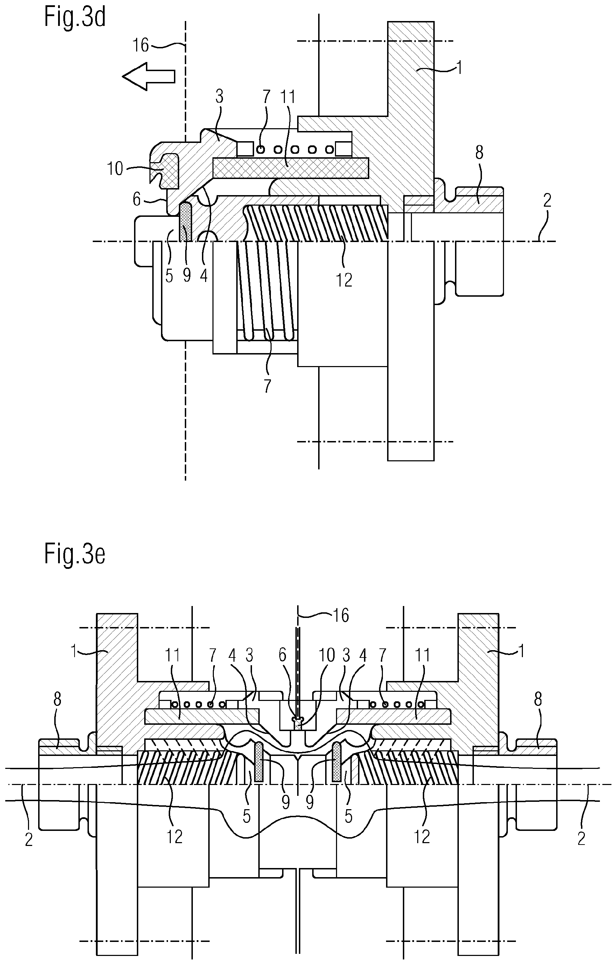

Auch beim Ausführungsbeispiel gemäß der Figur 3 (Ansichten a bis e) sind die Schiebemuffe 3 und der Ventilkörper 5 axial verschiebbar im Gehäuse 1 gelagert. Im Unterschied zum Ausführungsbeispiel gemäß der Figur 2 ist bei der Gestaltung gemäß den Figuren 3d und 3e jedoch wiederum ein Gummirohr 11 vorgesehen, über welches die Schiebemuffe 3 am Gehäuse 1 angeschlossen ist. Ferner ist die Ventilkörperfeder 12 radial innerhalb der axialen Verlängerung des Ventilkörpers 5 positioniert, wohingegen diese gemäß dem Ausführungsbeispiel in der Figur 2 diese axiale Verlängerung auf der radialen Außenseite umschließt.

Die zu der Figur 1 genannten Vorteile ergeben sich auch bei den Ausführungsformen gemäß den Figuren 2 und 3.

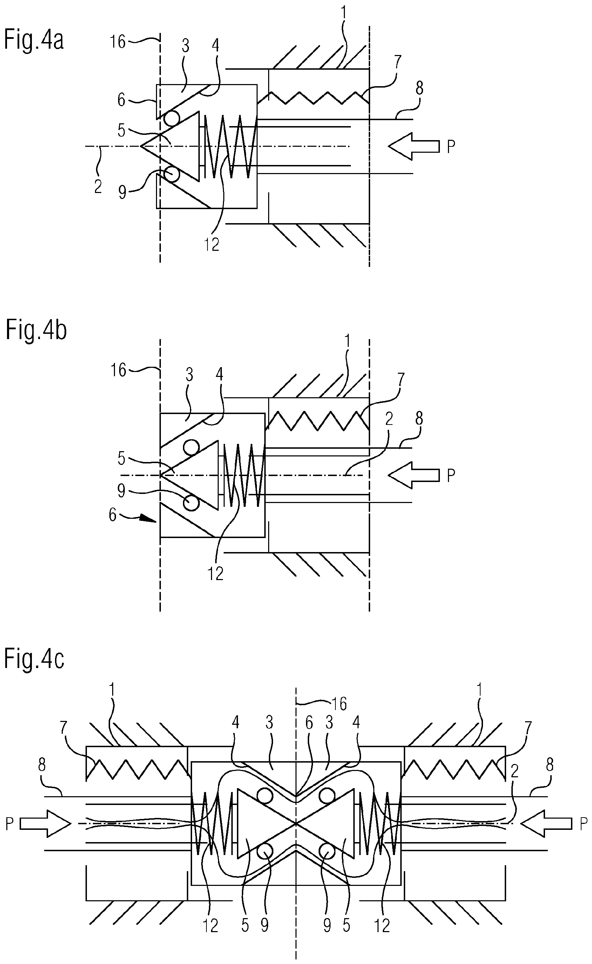

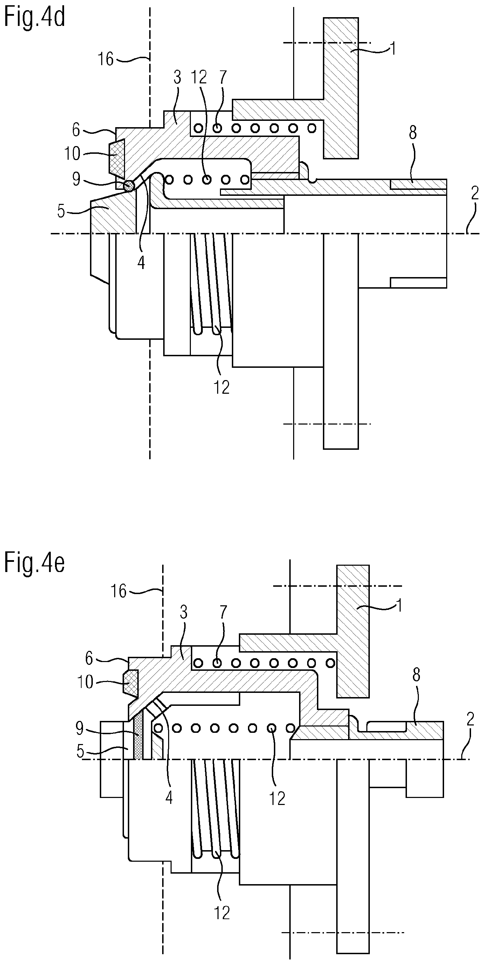

Bei den Ausführungsbeispielen der Figur 4 (Ansichten a bis e) sind wiederum die Schiebemuffe 3 und der Ventilkörper 5 in Richtung der Längsachse 2 verschiebbar gegenüber dem Gehäuse 1. Im Unterschied zu den Ausführungsformen gemäß der Figuren 1 bis 3 kann eine radial äußere Abdichtung der Schiebemuffe 3 gegen das Gehäuse 1 entfallen, weil die Schiebemuffe 3 den Kanal vollständig umschließt und eine entsprechende Luftleitung direkt an der Schiebemuffe 3 angeschlossen werden kann. Somit stellt die Schiebemuffe 3 ein endseitiges Rohrstück für die Luftleitung dar.

Bei der Ausführungsform gemäß der Figur 4d gleitet der Ventilkörper 5 mit seiner axialen Verlängerung radial innerhalb der Schiebemuffe 3, wobei die Ventilkörperfeder 12 radial außerhalb der axialen Verlängerung positioniert ist. Bei der Figur 4e ist hingegen die Ventilkörperfeder 12 radial innerhalb der axialen Verlängerung des Ventilkörpers 5 positioniert.

Auch bei den Ausführungsformen gemäß der Figur 4 ergeben sich die zuvor zu den Figuren 1 bis 3 genannten Vorteile. Zudem wird durch die spezielle Gestaltung der Schiebemuffe 3 ein sehr gut abgedichtetes System mit einem Eingang und Ausgang an der Schiebemuffe 3 erreicht.

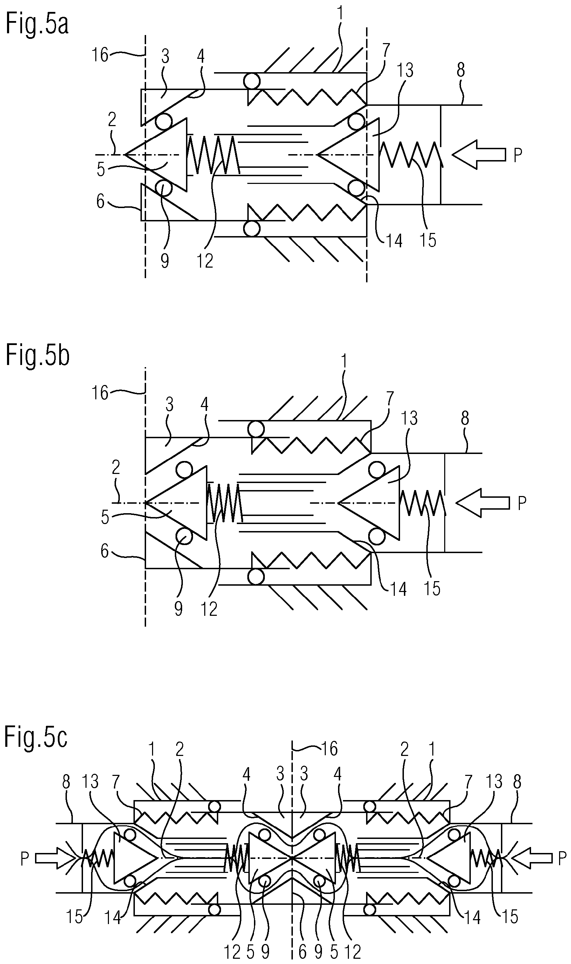

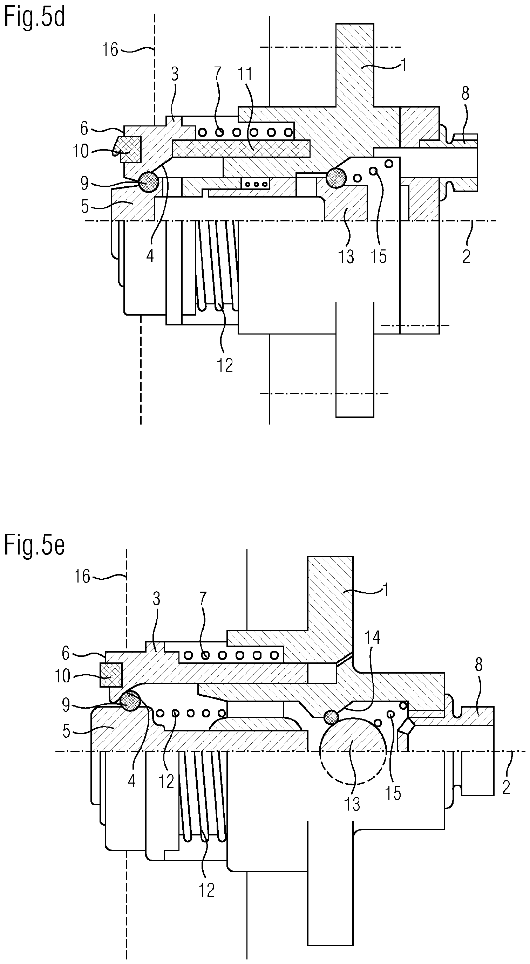

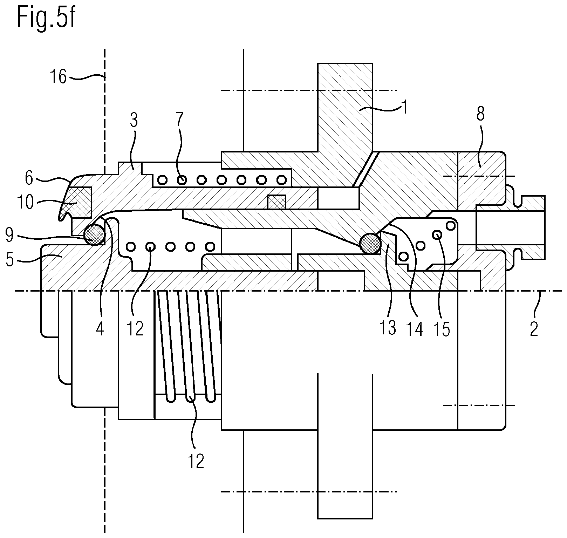

Bei den Ausführungsbeispielen gemäß der Figur 5 (Ansichten a bis f) sind zwei Ventile in Reihe zueinander geschaltet. Das erste Ventil entspricht hinsichtlich seiner Funktion und seiner Ausgestaltung jenem der Figur 3. Das zweite Ventil weist den zweiten Ventilkörper 13 auf, der mit einem zweiten Ventilsitz 14 im Gehäuse 1 zusammenarbeitet. Der zweite Ventilkörper 13 ist elastisch gegen die zweite Ventilfeder 15 abgestützt. Der zweite Ventilkörper 13 wird entgegen der Kraft der zweiten Ventilfeder 15 vom zweiten Ventilsitz 14 abgehoben, um den Strömungsquerschnitt für das Druckmedium beziehungsweise die Druckluft freizugeben. Das Abheben kann durch eine entsprechende Druckdifferenz über dem zweiten Ventilkörper 13 bewirkt werden und/oder dadurch, dass der erste Ventilkörper 5 beziehungsweise eine axiale Verlängerung den zweiten Ventilkörper 13 mechanisch vom zweiten Ventilsitz 14 abhebt.

Bei der Ausgestaltung gemäß der Figur 5d ist die Schiebemuffe 3 wiederum mittels eines Gummirohres 11 am Gehäuse 1 angeschlossen.

Bei der Figur 5e ist der zweite Ventilkörper 13 zumindest im Wesentlichen kugelförmig und wird insbesondere durch die axiale Verlängerung des Ventilkörpers 5 betätigt.

Bei der Ausführungsform gemäß der Figur 5f ist der zweite Ventilkörper 13 kegelförmig und die axiale Verlängerung des Ventilkörpers 5 gleitet radial innerhalb des zweiten Ventilkörpers 13.

Auch bei den Ausgestaltungen gemäß der Figur 5 ergeben sich die zuvor genannten Vorteile. Zudem kann eine doppelte Abdichtung mit zwei seriellen Ventilen erreicht werden.

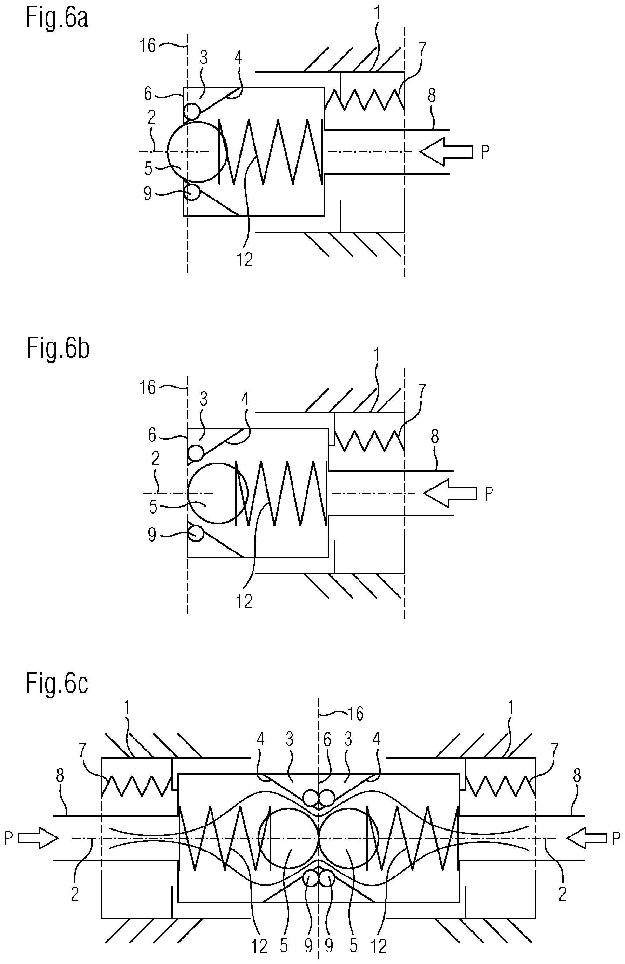

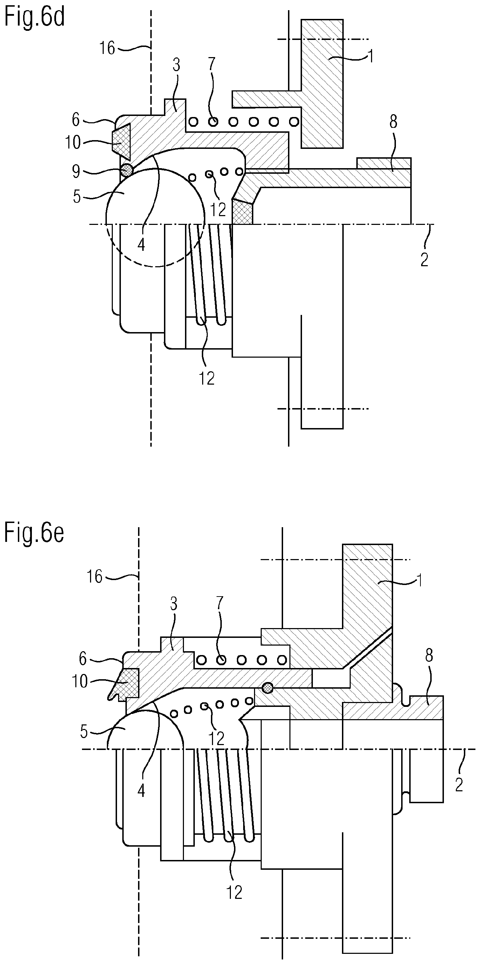

Bei den Ausführungsbeispielen gemäß der Figur 6 (Ansichten a bis e) ist der Ventilkörper 5 zumindest im Wesentlichen kugelförmig. Insbesondere stützt sich der Ventilkörper 5 an einer radial innen kegelförmigen Schiebemuffe 3 ab.

Bei der Ausgestaltung gemäß der Figur 6d ist die Schiebemuffe 3 wiederum als geschlossenes Rohr ausgebildet, sodass eine Abdichtung gegenüber dem Gehäuse 1 entfallen kann. Der Ventilkörper 5 stützt sich über die Ventilkörperfeder 12 gegen die Schiebemuffe 3 ab.

Bei der Ausgestaltung gemäß der Figur 6e stützt sich der Ventilkörper 5 über die Ventilkörperfeder 12 gegen das Gehäuse 1 ab. Die Schiebemuffe 3 ist gegenüber dem Gehäuse 1 abgedichtet.

Obwohl in den Ausführungsbeispielen der Ventilkörper 5 mit einer konischen Oberfläche gezeigt ist, die mit einem entsprechenden Ventilsitz 4 zusammenwirkt, um das Ventil auszubilden, ist diese Gestaltung nicht zwingend. So könnte der Ventilkörper 5 auch eine ebene Oberfläche aufweisen, die an einem entsprechenden Ventilsitz 4 anschlägt. Beispielsweise könnte der Ventilkörper 5 zylinderförmig oder plattenförmig sein und mit einer ebenen Stirnseite, die beispielsweise eine Ringform aufweist, an einem ebenen, insbesondere ebenfalls ringförmigen, Ventilsitz 4 anschlagen.

### Bezugszeichenliste

- 1: Gehäuse
- 2: Längsachse
- 3: Schiebemuffe
- 4: Ventilsitz
- 5: Ventilkörper
- 6: vorderes Endes
- 7: Ventilfeder
- 8: hinteres Ende
- 9: Dichtung
- 10: Dichtelement
- 11: Gummirohr
- 12: Ventilkörperfeder
- 13: zweiter Ventilkörper
- 14: zweiter Ventilsitz
- 15: zweite Ventilfeder
- 16: Ebene der Stirnplatte

## Patentansprüche

1. Kuppeleinrichtung für eine Druckluftkupplung oder Druckmediumkupplung in einem Schienenfahrzeug
1.1 mit einem Gehäuse (1);
1.2 mit einer Schiebemuffe (3), die verschiebbar im Gehäuse (1) gelagert ist und stirnseitig an einem axialen Ende aus dem Gehäuse (1) herausragt;
1.3 mit einem Ventilkörper (5) der mit einem Ventilsitz (4) zusammenarbeitet, um ein Ventil auszubilden, das einen Strömungsquerschnitt wahlweise absperrt oder freigibt;
1.4 die Schiebemuffe (3) den Ventilsitz ausbildet, wobei der Ventilsitz (4) in einem Abschnitt der Schiebemuffe (3) ausgebildet ist, der axial außerhalb des Gehäuses (1), zumindest in einem ungekuppelten Zustand der Kuppeleinrichtung positioniert ist, **dadurch gekennzeichnet, dass** der Ventilsitz (4) im Bereich des axial äußeren Endes der Schiebemuffe (3) positioniert ist.

2. Kuppeleinrichtung gemäß Anspruch 1, **dadurch gekennzeichnet, dass** der Ventilkörper (5) und/oder der Ventilsitz (4) eine dem jeweils anderen Bauteil zugewandte konische äußere Oberfläche aufweist.

3. Kuppeleinrichtung gemäß Anspruch 2, **dadurch gekennzeichnet, dass** der Ventilkörper (5) kugelförmig ist.

4. Kuppeleinrichtung gemäß Anspruch 2, **dadurch gekennzeichnet, dass** der Ventilkörper (5) kegelförmig ist.

5. Kuppeleinrichtung gemäß einem der Ansprüche 1 bis 4, **dadurch gekennzeichnet, dass** der Ventilkörper (5) ortsfest im Gehäuse (1) positioniert ist.

6. Kuppeleinrichtung gemäß einem der Ansprüche 1 bis 5, **dadurch gekennzeichnet, dass** der Ventilkörper (5) verschiebbar im Gehäuse (1) positioniert ist.

7. Kuppeleinrichtung gemäß einem der Ansprüche 1 bis 6, **dadurch gekennzeichnet, dass** die Schiebemuffe (3) eine Längsachse (2) der Kuppeleinrichtung konzentrisch umschließt und in Richtung der Längsachse (2) verschiebbar im Gehäuse (1) gelagert ist.

8. Kuppeleinrichtung gemäß einem der Ansprüche 5 oder 6 und gemäß Anspruch 7, **dadurch gekennzeichnet, dass** der Ventilkörper (5) fluchtend zur Schiebemuffe (3) positioniert ist und insbesondere radial innerhalb der Schiebemuffe (3) positioniert ist.

9. Kuppeleinrichtung gemäß einem der Ansprüche 1 bis 8, **dadurch gekennzeichnet, dass** ein zweiter Ventilkörper (13) und ein zweiter Ventilsitz (14) hinsichtlich einer Druckmedium- oder Druckluftströmung durch die Kuppeleinrichtung in Reihe zu dem ersten Ventilkörper (5) und Ventilsitz (4) vorgesehen sind, um ein zweites Ventil auszubilden, das einen Strömungsquerschnitt wahlweise absperrt oder freigibt, wobei beide Ventile gemeinsam betätigbar sind.

## Claims

1. Coupling device for a compressed-air coupling or pressurized-medium coupling in a rail vehicle,
1.1 having a housing (1);
1.2 having a sliding collar (3) which is displaceably mounted in the housing (1) and at an axial end on the end face protrudes from the housing (1);
1.3 having a valve body (5) which interacts with a valve seat (4) so as to configure a valve which selectively blocks or releases a flow cross section;
1.4 the sliding collar (3) configuring the valve seat (4),
wherein the valve seat (4) is configured in a portion of the sliding collar (3) that, at least in an uncoupled state of the coupling device, is positioned axially outside the housing (1), **characterized in that** the valve seat (4) is positioned in the region of the axially outer end of the sliding collar (3).

2. Coupling device according to Claim 1, **characterized in that** the valve body (5) and/or the valve seat (4) have/has a conical external surface that faces the respective other component.

3. Coupling device according to Claim 2, **characterized in that** the valve body (5) is spherical.

4. Coupling device according to Claim 2, **characterized in that** the valve body (5) is conical.

5. Coupling device according to one of Claims 1 to 4, **characterized in that** the valve body (5) is positioned so as to be locationally fixed in the housing (1).

6. Coupling device according to one of Claims 1 to 5, **characterized in that** the valve body (5) is positioned so as to be displaceable in the housing (1) .

7. Coupling device according to one of Claims 1 to 6, **characterized in that** the sliding collar (3) concentrically encloses a longitudinal axis (2) of the coupling device, and is mounted in the housing (1) so as to be displaceable in the direction of the longitudinal axis (2).

8. Coupling device according to either of Claims 5 or 6 and according to Claim 7, **characterized in that** the valve body (5) is positioned so as to be aligned with the sliding collar (3) and is in particular positioned so as to be radially within the sliding collar (3).

9. Coupling device according to one of Claims 1 to 8, **characterized in that** a second valve body (13) and a second valve seat (14), in terms of the flow of the pressurized medium or compressed air through the coupling device, are provided in series with the first valve body (5) and valve seat (4) so as to configure a second valve which selectively blocks or releases a flow cross section, wherein both valves are conjointly activatable.

## Revendications

1. Dispositif d'accouplement pour un accouplement à air comprimé ou un accouplement à fluide sous pression dans un véhicule ferroviaire
1.1 comprenant un carter (1) ;
1.2 comprenant un manchon coulissant (3), qui est monté de manière coulissante dans le carter (1) et qui fait saillie du carter (1) côté frontal à une extrémité axiale ;
1.3 comprenant un corps de soupape (5) qui coopère avec un siège de soupape (4) pour former une soupape qui, au choix, bloque ou libère une section transversale d'écoulement ;
1.4 le manchon coulissant (3) formant le siège de soupape (4), le siège de soupape (4) étant formé dans une section du manchon coulissant (3) qui est positionnée axialement à l'extérieur du carter (1), au moins dans un état désaccouplé du dispositif d'accouplement, **caractérisé en ce que** le siège de soupape (4) est positionné dans la zone de l'extrémité axialement extérieure du manchon coulissant (3).

2. Dispositif d'accouplement selon la revendication 1, **caractérisé en ce que** le corps de soupape (5) et/ou le siège de soupape (4) présentent une surface extérieure conique tournée vers l'autre composant respectif.

3. Dispositif d'accouplement selon la revendication 2, **caractérisé en ce que** le corps de soupape (5) est de forme sphérique.

4. Dispositif d'accouplement selon la revendication 2, **caractérisé en ce que** le corps de soupape (5) est de forme conique.

5. Dispositif d'accouplement selon l'une quelconque des revendications 1 à 4, **caractérisé en ce que** le corps de soupape (5) est positionné de manière fixe dans le carter (1).

6. Dispositif d'accouplement selon l'une quelconque des revendications 1 à 5, **caractérisé en ce que** le corps de soupape (5) est positionné de manière coulissante dans le carter (1).

7. Dispositif d'accouplement selon l'une quelconque des revendications 1 à 6, **caractérisé en ce que** le manchon coulissant (3) entoure concentriquement un axe longitudinal (2) du dispositif d'accouplement et est monté dans le carter (1) de manière coulissante dans la direction de l'axe longitudinal (2).

8. Dispositif d'accouplement selon l'une quelconque des revendications 5 ou 6 et selon la revendication 7, **caractérisé en ce que** le corps de soupape (5) est positionné en alignement avec le manchon coulissant (3) et est notamment positionné radialement à l'intérieur du manchon coulissant (3).

9. Dispositif d'accouplement selon l'une quelconque des revendications 1 à 8, **caractérisé en ce qu'**un deuxième corps de soupape (13) et un deuxième siège de soupape (14) sont prévus en série avec le premier corps de soupape (5) et le premier siège de soupape (4) au regard d'un écoulement de fluide sous pression ou d'air comprimé à travers le dispositif d'accouplement, afin de former une deuxième soupape qui, au choix, bloque ou libère une section transversale d'écoulement, les deux soupapes pouvant être actionnées conjointement.
